(19)

Europäisches
Patentamt

European
Patent Office

Office européen
des brevets

(11) **EP 0 972 140 B1**

(12) **EUROPÄISCHE PATENTSCHRIFT**

(45) Veröffentlichungstag und Bekanntmachung des
Hinweises auf die Patenterteilung:
**04.07.2007 Patentblatt 2007/27**

(21) Anmeldenummer: **99900865.9**

(22) Anmeldetag: **01.02.1999**

(51) Int Cl.:
**F16C 39/06** *(2006.01)*

(86) Internationale Anmeldenummer:
**PCT/CH1999/000043**

(87) Internationale Veröffentlichungsnummer:
**WO 1999/040334 (12.08.1999 Gazette 1999/32)**

(54) **VERFAHREN UND ANORDNUNG ZUR ANSTEUERUNG DER TRAGWICKLUNGS- UND ANTRIEBSWICKLUNGSSYSTEME IN ELEKTRISCHEN MASCHINEN MIT MAGNETISCHER LAGERUNG SOWIE ELEKTRISCHER ANTRIEB**

METHOD AND DEVICE FOR CONTROLLING SYSTEMS WHICH HAVE WINDING FOR CARRYING POWER AND WINDING FOR DRIVE IN ELECTRICAL MACHINES WITH MAGNETIC BEARING ASSEMBLY, AND AN ELECTRIC DRIVE

PROCEDE ET DISPOSITIF D'AMORCAGE DE SYSTEMES A ENROULEMENT POUR FORCE PORTANTE ET A ENROULEMENT POUR FORCE D'ENTRAINEMENT DANS DES MACHINES ELECTRIQUES A PALIER MAGNETIQUE, ET ENTRAINEMENT ELECTRIQUE

(84) Benannte Vertragsstaaten:
**CH DE GB LI**

(30) Priorität: **03.02.1998 AT 18998**

(43) Veröffentlichungstag der Anmeldung:
**19.01.2000 Patentblatt 2000/03**

(73) Patentinhaber: **Lust Antriebstechnik GmbH
35633 Lahnau (DE)**

(72) Erfinder:
• **AMRHEIN, Wolfgang
A-4100 Ottensheim (AT)**

• **SILBER, Siegfried
A-4202 Kirchschlag (AT)**

(74) Vertreter: **Sulzer Management AG
KS/Patente/0007
Zürcherstrasse 14
8401 Winterthur (CH)**

(56) Entgegenhaltungen:
**EP-A- 0 739 078      WO-A-95/18925
FR-A- 2 239 038**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

# EP 0 972 140 B1

**Beschreibung**

Die Erfindung betrifft ein Verfahren und eine Anordnung zur Ansteuerung der Tragwicklungs- und der Antriebswicklungssysteme in magnetisch gelagerten elektrischen Maschinen zwecks Einprägung von winkelunabhängigen Kräften und Momenten sowie einen entsprechenden elektrischen Antrieb.

Die Magnetlagertechnik erschließt Applikationsfelder des Maschinen- und Gerätebaus mit äußerst hohen Anforderungen an den Drehzahlbereich, die Lebensdauer die Reinheit und die Dichtheit des Antriebsystems - also im wesentlichen Anwendungsgebiete, die unter Verwendung konventioneller Lagertechniken nicht oder nur schwer realisierbar sind. Verschiedene Ausführungen, wie beispielsweise Hochgeschwindigkeitsfräs- und Schleifspindeln, Turbokompressoren, Vakuumpumpen, oder Pumpen für hochreine chemische oder medizinische Erzeugnisse werden bereits mit Magnetlagern ausgerüstet.

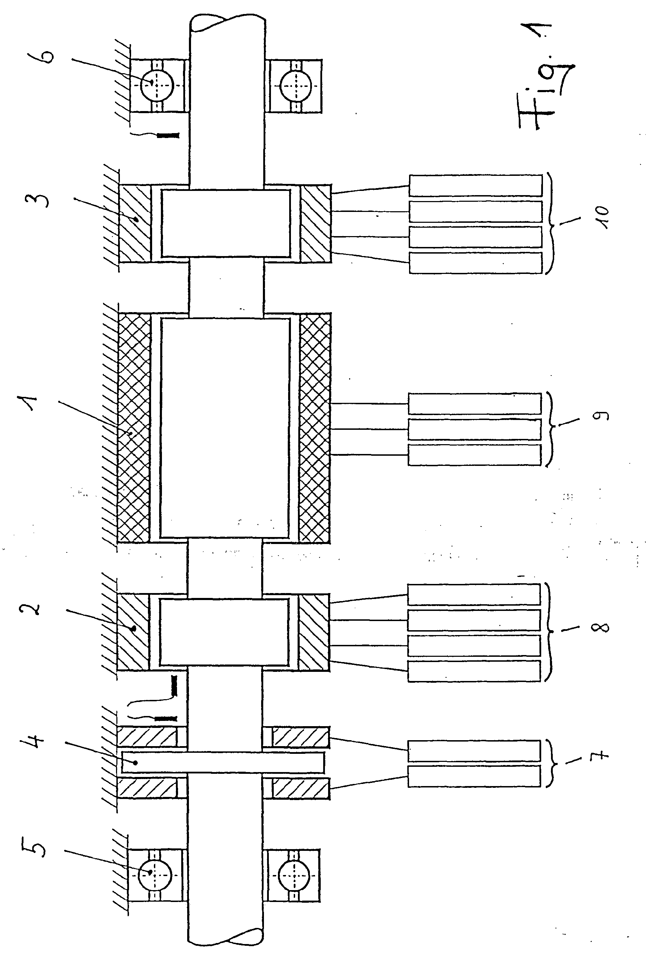

Eine konventionelle magnetgelagerte Maschine (Fig. 1) benötigt neben einer Maschineneinheit 1 zwei Radialmagnetlager 2 und 3, ein Axialmagnetlager 4, zwei mechanische Auffanglager 5 und 6, sowie für die Ansteuerung der Motor- und Magnetlagerstränge insgesamt zehn Leistungssteller 7,8,9, und 10.

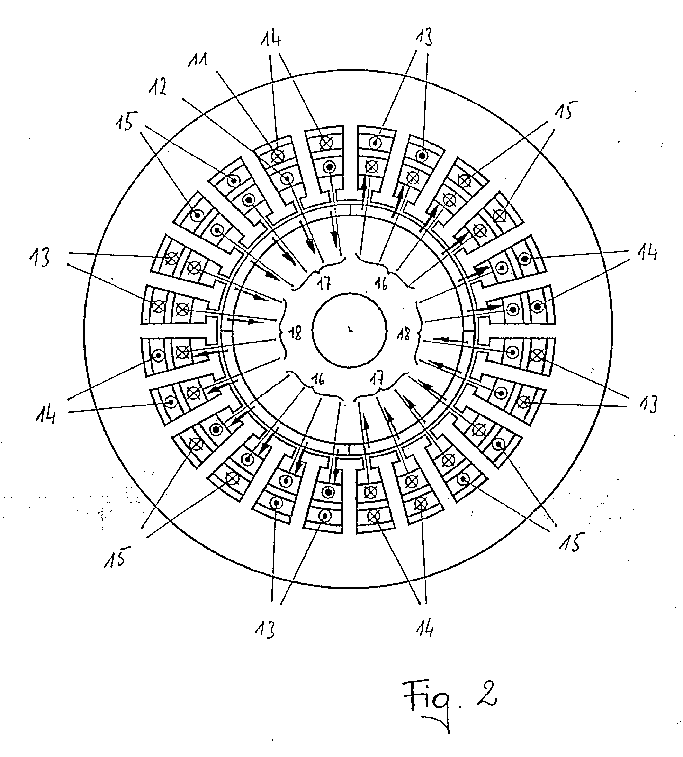

In der Literatur gibt es Vorschläge (Fig. 2), Maschinen und Radialmagnetlager in einer magnetischen Statoreinheit zu integrieren. In einem Stator sind zwei getrennte Wicklungssysteme 11 und 12 für Antriebs- und Tragkraftwicklung mehrlagig in Nuten eingebracht. Beide Wicklungssysteme sind dreisträngig und unterscheiden sich in der Polpaarzahl um eins. Die Spulen sind gesehnt und über mehrere Nuten verteilt, wodurch eine annähernd sinusförmige Flußverkettung erreicht wird:

- vierpolige Antriebswicklung 11 (außen): erster Strang 13, zweiter Strang 14, dritter Strang 15
- zweipolige Tragwicklung 12 (innen): erster Strang 16, zweiter Strang 17, dritter Strang 18

Die in den Figuren dargestellten Maschinenquerschnitte sind beispielhaft und zum Teil stark vereinfacht und dienen ausschließlich der genaueren Erläuterung des Funktionsprinzips.

Bisher ausgeführte Ansteuerkonzepte erfordern sinusförmig verteilte Luftspaltflußdichten und sinusförmige Ankerstrombeläge. Damit sind verteilte Wicklungssysteme erforderlich (Fig. 2).

EP-A-0 739 078 offenbart ein Verfahren mit den Merkmalen des Oberbegriffs des Anspruches 1, sowie eine zugehörige Anordnung.

Der vorliegenden Erfindung liegt die Aufgabe zugrunde, ein Verfahren sowie eine möglichst wenig aufwendige Anordnung zur Ansteuerung der Tragwicklungs- und Antriebswicklungssystemen von elektrischen Maschinen mit magnetischer Lagerung vorzuschlagen, um einen vorgegebenen Tragkraft- und Momentenverlauf einprägen zu können.

Diese Aufgabe wird durch ein Verfahren bzw. eine Anordnung gelöst, wie sie durch die Merkmale des jeweiligen unabhängigen Patentanspruchs charakterisiert ist. Besonders vorteilhafte Ausgestaltungen ergeben sich aus den Merkmalen der abhängigen Ansprüche.

Im folgenden wird die Erfindung anhand der Zeichnung näher erläutert. Es zeigen, in schematischer Darstellung und/oder im Schnitt:

Fig. 1    eine konventionelle elektrische Maschine mit magnetischer Lagerung,

Fig. 2    eine konventionelle elektrische Maschine mit magnetischer Lagerung, bei welcher die Antriebs- und Tragkraftwicklungssysteme in einer magnetischen Statoreinheit integriert sind,

Fig. 3    ein Ausführungsbeispiel einer elektrischen Maschine mit magnetischer Lagerung (Aussenläufer) und reduziertem Aufwand, bei welcher das erfindungsgemässe Verfahren eingesetzt werden kann, wobei Antriebs- und Tragkraftwicklung ein- und dieselbe Wicklung sind,

Fig. 4    ein Ausführungsbeispiel eines Motors mit magnetischer Lagerung (Aussenläufer) und mit vier konzentrierten Spulen sowie einer Bestromung der konzentrierten Spulen zur Erzeugung einer Tragkraft,

Fig. 5    den Verlauf der Tragkraft, der durch die Bestromung gemäss Fig. 4 hervorgerufen wird,

Fig. 6    das Ausführungsbeispiel des Motors gemäss Fig. 4 mit einer anderen Bestromung zur Erzeugung einer Tragkraft,

Fig. 7    der Verlauf der Tragkraft, der durch die Bestromung gemäss Fig. 6 hervorgerufen wird,

Fig. 8    das Ausführungsbeispiel des Motors gemäss Fig. 4 (Aussenläufer) mit einer Bestromung zur Erzeugung eines Drehmoments,

Fig. 9 ein Ausführungsbeispiel einer Anordnung zur Durchführung des erfindungsgemässen Verfahrens,

Fig. 10 ein weiteres Ausführungsbeispiel einer Anordung zur Durchführung des erfindungsgemässen Verfahrens mit einem Entkopplungsnetzwerk,

Fig.11 ein Ausführungsbeispiel eines Motors mit magnetischer Lagerung (Aussenläufer) und getrennten Wicklungssystemen für die Tragkraft- und die Momentenbildung,

Fig.12 die an Luft grenzende Oberfläche eines ferromagnetischen Körpers,

Fig.13 die Wirkungsweise der passiven Stabilisierung bei einem Scheibenläufermotor (Innenläufer) ohne aktives Axiallager bei axialer Auslenkung des Rotors,

Fig.14 die Wirkungsweise der passiven Stabilisierung bei einem Scheibenläufermotor (Innenläufer) ohne aktives Axiallager bei Verkippung des Rotors,

Fig.15 die Tragwicklung eines Einphasenmotors (Aussenläufer) mit magnetischer Lagerung auf einem Ständer mit vier Nuten,

Fig.16 die Momentenwicklung eines Einphasenmotors mit magnetischer Lagerung (Aussenläufer) auf dem Ständer mit vier Nuten gemäss Fig.15,

Fig.17 eine Tragwicklung des Einphasenmotors mit der Polpaarzahl eins,

Fig.18 eine fertigungstechnisch einfachere Variante der Tragswicklung aus Fig. 17 unter Verwendung von konzentrierten Spulen,

Fig.19 ein Einphasenmotor mit magnetischer Lagerung (Aussenläufer) mit zwölf konzentrierten Spulen,

Fig.20 der Momentenverlauf bei einem Einphasenmotor mit magnetischer Lagerung und konzentrierten Spulen gemäss Fig. 19,

Fig.21 der Tragkraftverlauf bei einem Einphasenmotor mit magnetischer Lagerung und konzentrierten Spulen gemäss Fig. 19

Fig.22 den Verlauf der Maxwell- und der Lorentzkräfte bei einem Einphasenmotor gemäss Fig. 19,

Fig.23 den Verlauf des Koeffizienten $k_{11}(\varphi)$ einer winkelabhängigen Matrix $k(\varphi)$ für eine Drehung des Rotors um 360˚, wobei die Matrix $k(\varphi)$ den Zusammenhang zwischen den Strangströmen und den Kräften bzw. dem Moment darstellt,

Fig.24 den Verlauf des Koeffizienten $k_{12}(\varphi)$ der Matrix $k(\varphi)$

und

Fig.25 den Verlauf des Koeffizienten $k_{33}(\varphi)$ der Matrix $k(\varphi)$.

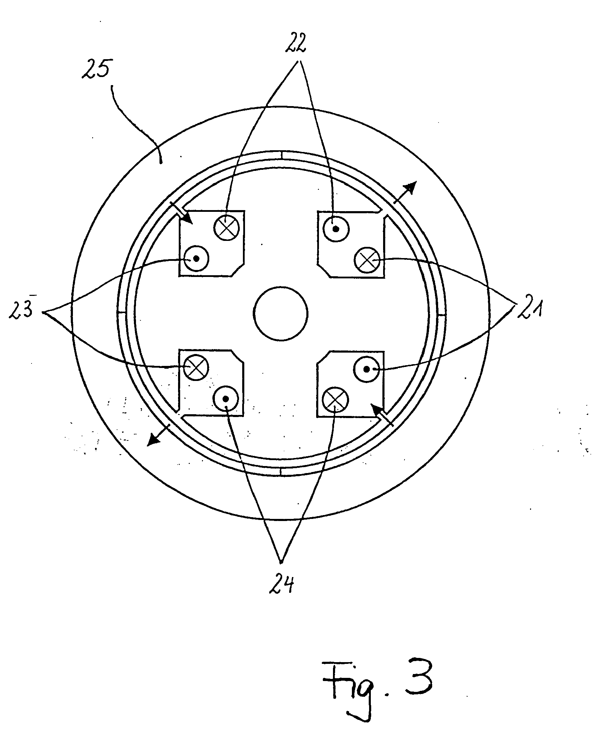

Fig. 3 zeigt eine Ausführungsform einer Maschine mit magnetischer Lagerung mit reduziertem Aufwand. Durch entsprechende Bestromung der Wicklungen 21, 22, 23 und 24 kann sowohl das Drehmoment als auch die Tragkraft vorgegeben werden. Damit ist eine berührungsfreie Lagerung des Rotors 25 der Maschine möglich. Die Pfeile in den einzelnen Figuren zeigen jeweils die Richtung der Magnetisierung der einzelnen Permanentmagnetsegmente an.

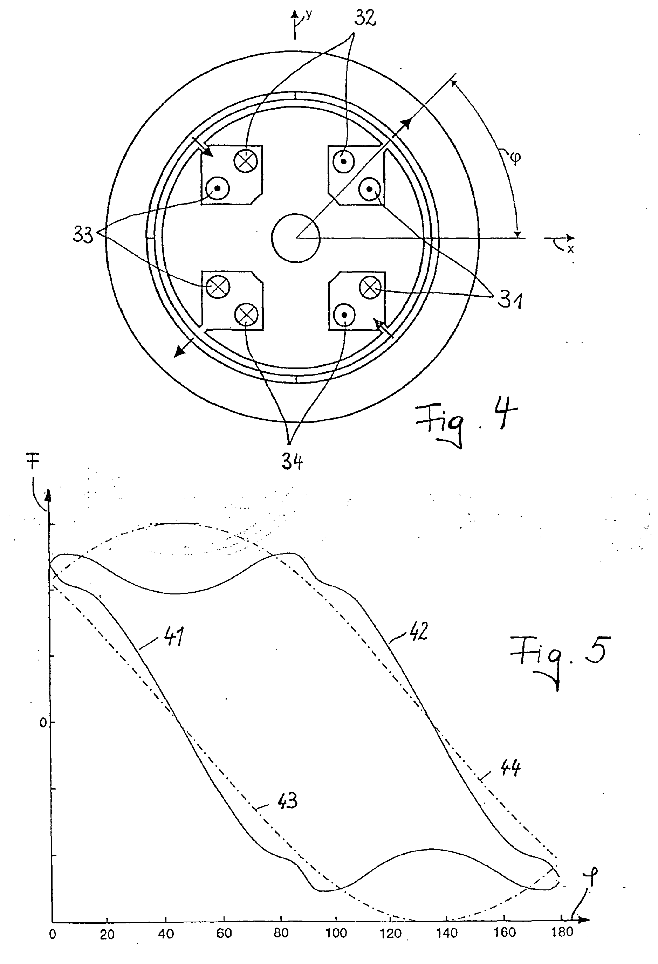

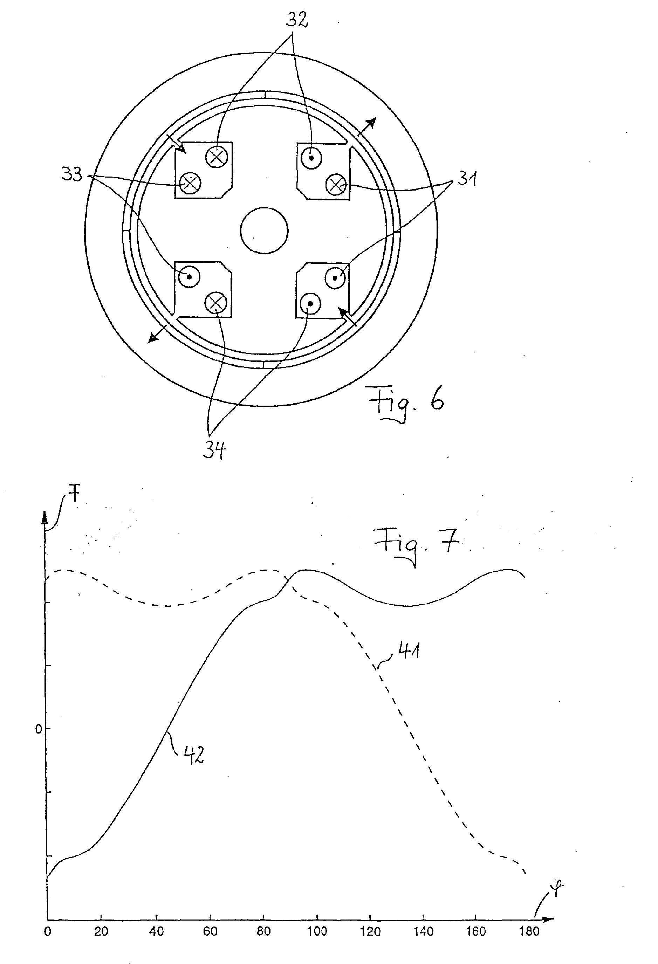

Fig. 4 zeigt einen Motor mit magnetischer Lagerung (Aussenläufer) mit vier konzentrierten Wicklungen. Durch die gezeichnete Bestromung der Spulen 31, 32, 33 und 34 erhält man in Abhängigkeit vom Rotorwinkel $\varphi$ (für die in Fig. 4 gezeigte Position des Rotors in x- bzw. y-Richtung) in der Rotorebene einen Kraftverlauf, der in Fig. 5 dargestellt ist. Die Kraftkomponente 41 weist in x-Richtung in einem ständerfesten, kartesischen Koordinatensystem. Analog weist die Kraftkomponente 42 in y-Richtung. Durch die Verwendung von konzentrierten Spulen und dem Einfluß der Eisensättigung kommt es zu Kraftverläufen, die bei einer konstanten Bestromung der Wicklungen stark von einer Sinusform, die durch die strichpunktierten Linien 43 und 44 dargestellt ist, abweichen. Diese Nichtlinearitäten bewirken weiterhin eine mögliche Veränderung der Kurvenform in Abhängigkeit der Strangströme. In Fig. 6 ist eine weitere mögliche Bestromung angegeben Der dazugehörige Kraftverlauf ist in Fig. 7 dargestellt.

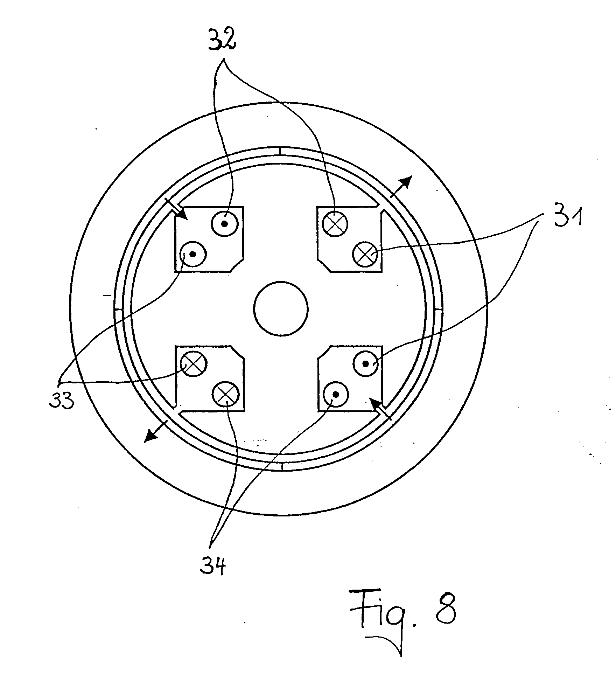

Die in Fig. 4 und Fig. 6 dargestellten Bestromungen der Spulensysteme bewirken eine Erzeugung von radial am Stator angreifenden Kräften, den Tragkräften, wobei das elektrische Drehmoment bei diesen Bestromungen vernachlässigbar klein bleibt. Ein Drehmoment kann mit der in Fig. 8 dargestellten Bestromung der Spulensysteme erreicht werden. Der Drehmomentverlauf in Abhängigkeit des Rotorwinkels weicht auch bei dieser Bestromung von einer Sinusform ab.

Soll für einen bestimmten Rotorwinkel und eine Rotorlage eine Kraft in x- und y-Richtung und ein Moment eingestellt werden, so können die in Fig. 4, Fig. 6 und Fig. 8 dargestellten Bestromungen überlagert werden, wobei die vorhandenen Nichtlinearitäten (z.B. Eisensättigung, Wirbelstromverluste) berücksichtigt werden müssen, sodaß eine lineare Überlagerung der Ströme nur in Ausnahmefällen zulässig ist.

Allgemein kann für die Kräfte- und Drehmomentbildung folgende Beziehung angegeben werden:

$$\mathbf{Q} = f(\mathbf{I}, \varphi, \mathbf{x}) \qquad\qquad (1)$$

Hierbei sind

$$\mathbf{Q} = \begin{bmatrix} F_x \\ F_y \\ M \end{bmatrix}$$

der Vektor der Tragkräfte $F_x$ und $F_y$ und des Moments M,

$$\mathbf{I} = \begin{bmatrix} i_1 \\ i_2 \\ \vdots \\ i_n \end{bmatrix} \qquad \text{der Vektor der Strangströme,}$$

$\varphi$     der Rotorwinkel,

$$\mathbf{x} = \begin{bmatrix} x \\ y \end{bmatrix} \qquad \text{die Lage des Rotors in radialer Richtung.}$$

Die ausgebildeten Kräfte und Momente sind über nichtlineare Funktionen von den Strangströmen, dem Rotorwinkel und der Rotorlage abhängig.

Um die Lage- und Momentenregelung des magnetgelagerten Motors zu vereinfachen, ist es günstig, wenn für eine vorgegebene Kraft und ein vorgegebenes Moment eine einfache Berechnung der Strangströme durchgeführt werden kann. Grundsätzlich kann aus der nichtlinearen Gleichung (1) der Vektor der Strangströme berechnet werden.

$$\mathbf{I} = g(\mathbf{Q}, \varphi, \mathbf{x}) \qquad\qquad (2)$$

Eine geschlossene Lösung für den in Gleichung (2) dargestellten Zusammenhang wird man allerdings nur für relativ einfache Anordnungen angeben können. Aus diesem Grund empfiehlt sich eine Linearisierung der Gleichung (1) um die Ruhelage des Systems:

$$\mathbf{Q} = \mathbf{Q}(\mathbf{I}_0, \varphi, \mathbf{x}_0) + \frac{\partial}{\partial \mathbf{x}} \mathbf{Q}(\mathbf{I}_0, \varphi, \mathbf{x}_0) \Delta \mathbf{x} + \frac{\partial}{\partial \mathbf{I}} \mathbf{Q}(\mathbf{I}_0, \varphi, \mathbf{x}_0) \Delta \mathbf{I} \qquad (3)$$

Aus der Gleichung (3) kann $\Delta$I für vorgegebene Tragkräfte und vorgegebene Momente unter der Voraussetzung einer regulären Matrix $\frac{\partial}{\partial \mathbf{I}} \mathbf{Q}(\mathbf{I}_0, \varphi, \mathbf{x}_0)$ angegeben werden

$$\Delta \mathbf{I} = \left( \frac{\partial}{\partial \mathbf{I}} \mathbf{Q}(\mathbf{I}_0, \varphi, \mathbf{x}_0) \right)^{-1} \left( \mathbf{Q} - \mathbf{Q}(\mathbf{I}_0, \varphi, \mathbf{x}_0) - \frac{\partial}{\partial \mathbf{x}} \mathbf{Q}(\mathbf{I}_0, \varphi, \mathbf{x}_0) \Delta \mathbf{x} \right) \qquad (4)$$

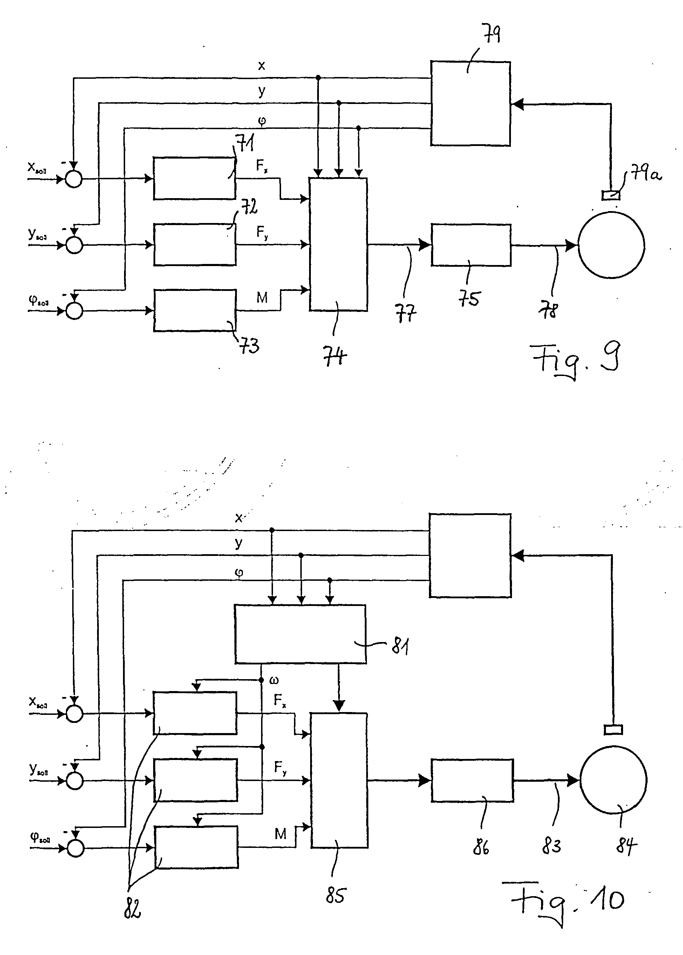

Gleichung (4) gilt allgemein und ist nicht an eine spezielle Wicklungskonfiguration gebunden. Es können also die erforderlichen Strangströme sowohl für magnetgelagerte Motoren mit gemeinsamen Antriebs- und Tragkraftwicklungssystemen (Fig. 3), als auch für magnetgelagerte Motoren mit getrennten Antriebs- und Tragkraftwicklungssystemen errechnet werden. Der Unterschied im Aufbau der Maschinen und die unterschiedlichen Strangzahlen müssen in Gleichung (4) berücksichtigt werden.
Ein magnetgelagerter Motor mit getrennten Antriebs- und Tragwicklungssystemen ist in Fig. 11 dargestellt. Mittels der Wicklung 101 wird das Drehmoment gebildet, die Wicklungen 102 und 103 erzeugen die radialen Tragkräfte.
Ein Ausführungsbeispiel für eine (Gesamt-)Anordnung zur Durchführung des erfindungsgemässen Verfahrens ist in Fig. 9 dargestellt. Unabhängig vom mechanischen Aufbau können entkoppelte Kraftregler 71 und 72 und ein Momentenregler 73 entworfen werden. In einem Prozessor 74 werden aus dem Drehmoment und den Kraftsignalen mit Hilfe von Tabellen, Vorschriften, Gleichungen oder nichtlinearen und linearen Funktionen Stromsollgrößen ermittelt, die in Form von digitalen Werten oder analogen Größen (Spannungen oder Ströme) 77 von einem Leistungsverstärker 75 in entsprechende Strangströme 78 umgewandelt oder verstärkt werden und den magnetgelagerten Motor 76 ansteuern. Die Rotorlage und der Rotorwinkel können mit einer entsprechenden Sensorik 79 mit Hilfe von mehreren Sensoren (z.B. Wirbelstromsensoren oder Hallsensoren 79a) gemessen werden, oder in einem mathematischen Modell aus Zustandsgrößen (Größen, die sich bei einem stabilisierten Rotor als Rechengrößen ergeben, z.B. Kopplungsterme zwischen x- und y- Richtung) errechnet werden.
Die Blöcke 71, 72, 73 und 74 können sowohl in einem geeigneten digitalen Prozessor in der Form von arithmetischen und logischen Funktionen, Wertetabellen und nichtlinearen und linearen Funktionen implementiert werden, oder durch analoge Schaltungen oder programmierbare und konfigurierbare integrierte analoge Schaltkreise aufgebaut werden.
Eine weitere Vereinfachung des beschriebenen Verfahrens kann erreicht werden, wenn die Linearisierung um die Stelle $\mathbf{x}_0 = 0$ (d.h. der Rotor befindet sich im Mittelpunkt) und $\mathbf{I} = \mathbf{I}_0$ durchgeführt wird. Dadurch erhält man für verschwindende Terme $\mathbf{Q}(\mathbf{I}_0,\varphi,x_0)$ und $\frac{\partial}{\partial \mathbf{x}} \mathbf{Q}(\mathbf{I}_0, \varphi, \mathbf{x}_0)$ den einfachen Zusammenhang:

$$\mathbf{I} = \left( \frac{\partial}{\partial \mathbf{I}} \mathbf{Q}(\varphi) \right)^{-1} \mathbf{Q} . \qquad (5)$$

Vereinfacht kann Gleichung (5) auch mit

$$\mathbf{I} = k(\varphi) \mathbf{Q} \qquad (6)$$

angegeben werden. Dabei ist $k(\varphi)$ eine vom Rotorwinkel abhängige Matrix. Die Strangströme können also im einfachsten Fall mit einer Matrixmultiplikation aus den erforderlichen Tragkräften und dem Drehmoment errechnet werden.
Um für den in Fig: 4 dargestellten Motor eine winkelabhängige Matrix $k(\varphi)$ angeben zu können, ist es zweckmäßig, die vier Strangstromkomponenten mit folgender Transformation

$$\mathbf{I} = \mathbf{V}\,\widetilde{\mathbf{I}}$$

mit

$$\mathbf{V} = \begin{bmatrix} -1 & 1 & 1 \\ 1 & 1 & -1 \\ 1 & -1 & 1 \\ -1 & -1 & -1 \end{bmatrix}$$

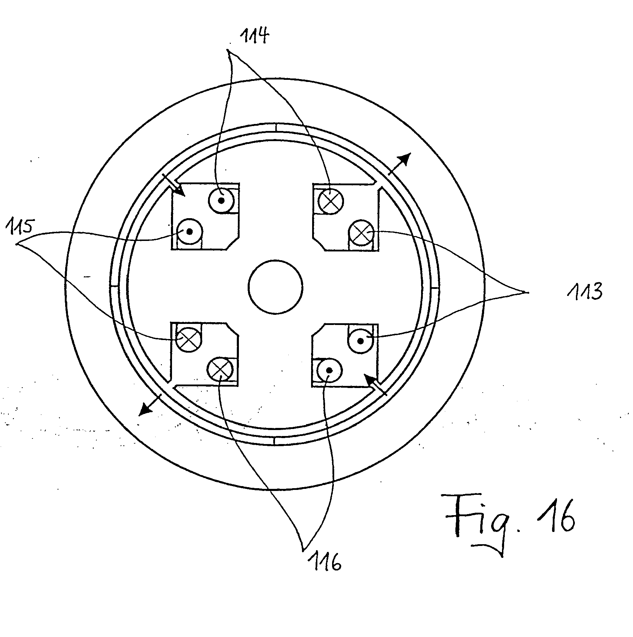

auf ein System mit drei Strängen (Kombination von Fig. 15 mit Fig. 16) überzuführen. Anstelle von $\mathbf{I}$ wird also mit $\widetilde{\mathbf{I}}$ gerechnet. Dadurch erhält man eine reguläre Matrix $\frac{\partial}{\partial \widetilde{\mathbf{I}}}\mathbf{Q}\!\left(\widetilde{\mathbf{I}}_0, \varphi, \mathbf{x}_0\right)$. Wird wiederum für $\mathbf{x}_0 = 0$ eingesetzt, so erhält man den folgenden einfachen Zusammenhang:

$$\left(\frac{\partial}{\partial \widetilde{\mathbf{I}}}\mathbf{Q}(\varphi)\right)^{-1} = \mathbf{k}(\varphi) = \begin{bmatrix} k_{11}(\varphi) & -k_{12}(\varphi) & 0 \\ k_{12}(\varphi) & k_{11}(\varphi) & 0 \\ 0 & 0 & k_{33}(\varphi) \end{bmatrix}$$

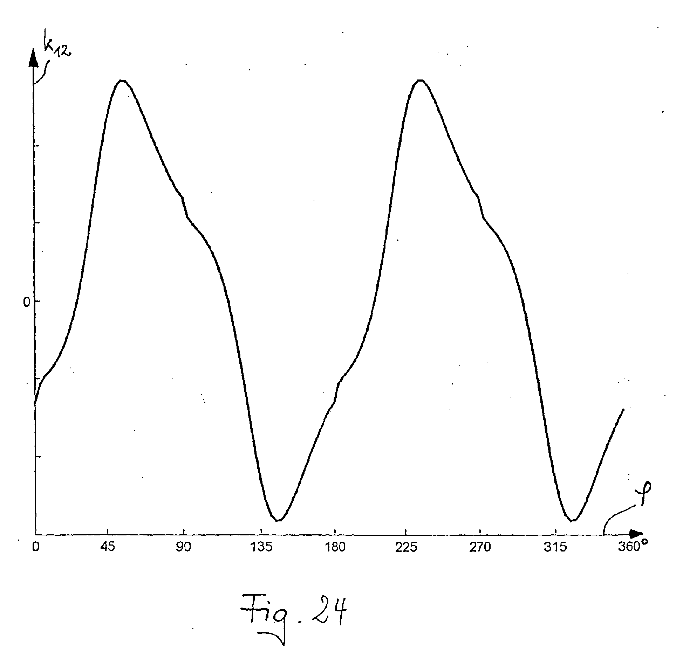

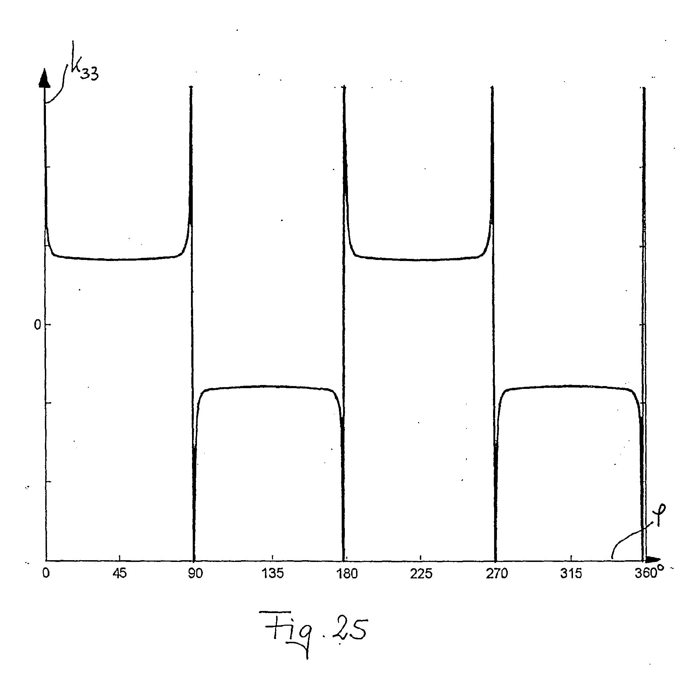

Fig. 23 zeigt den Verlauf von $k_{11}(\varphi)$ für eine Drehung des Rotors von 360°. Der Verlauf von $k_{12}(\varphi)$ ist in Fig. 24 dargestellt. Aus Fig. 25 kann der Verlauf von $k_{33}(\varphi)$ und damit der Strombedarf für ein konstantes Moment entnommen werden.

Mit Hilfe der vorangegangenen Gleichungen lassen sich Ströme finden, wie Matrix k(φ) beispielhaft zeigt, die zu einer weitgehenden Entkopplung der radialen und tangentialen Kraftkomponenten führen. Dies ist insbesondere für die Regelung der Kräfte in Richtung der Maschinenkoordinaten x und y sowie für die Regelung des Drehmoments wichtig, um mit getrennten Stromstellgrößen gezielt einerseits die Tragkräfte und andererseits das Drehmoment beeinflussen zu können. Eine andere Möglichkeit bestünde darin, mit einem in der elektrischen Schaltung, z.B. im Prozessor, implementierten Entkopplungsnetzwerk die gewünschte Wirkung zu erzielen. Diese Massnahme emfpiehlt sich insbesondere dann, wenn eine Spannungssteuerung anstelle einer Stromeinprägung über Stromregler vorgenommen wird. Die Realisierung kann sowohl hard- wie softwaremäßig erfolgen.

Der Zusammenhang zwischen den Strangströmen und den Tragkräften (im einfachsten Fall die Matrix $k(\varphi)$) kann entweder mittels analytischen und numerischen Methoden aus dem mathematischen Modell der magnetgelagerten Maschine berechnet werden, oder meßtechnisch bestimmt werden, oder durch einen Referenz- bzw. Kalibrierlauf, ausgehend von vorgegebenen nicht-optimalen Kraft- und Stromfunktionen, aus den Stellgrößen der Regler oder den Strangströmen bestimmt werden.

Wird die Matrix $k(\varphi)$ in Fourierkoeffizienten zerlegt, so kann auch folgende Bedingung angegeben werden

$$\mathbf{I} = \sum_{i=-\infty}^{\infty} \widetilde{k}_i(i\varphi)\mathbf{Q}\,. \tag{7}$$

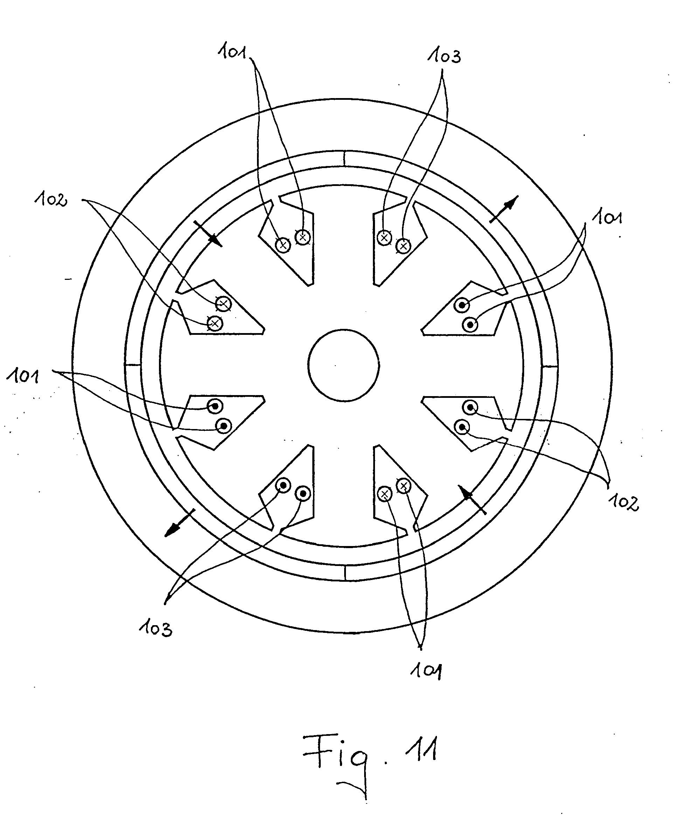

Alternativ zur Stromeinprägung kann durch ein zusätzliches Entkopplungsnetzwerk 81 in Fig. 10 und modifizierte Regler 82 anstelle eines Stroms eine Spannung 83 in die elektrischen Anschlüsse der magnetisch gelagerten Maschine 84 eingeprägt werden.

Das beschriebene Verfahren läßt sich insbesondere für rotierende magnetisch gelagerte elektrische Maschinen (werden z. T. als "lagerlose Motoren" bezeichnet), aber im Prinzip auch für magnetisch gelagerte Linearantriebe einsetzen. Dabei ist das Verfahren weder abhängig von einer bestimmten Strangzahl der Maschine, noch von einer bestimmten Kurvenform der Luftspaltflußdichte und des Ankerstrombelags, sodaß ein Einsatz in verschiedenen Motortypen, wie z. B. Reluktanzmotoren, Asynchronmotoren oder Synchronmotoren, insbesondere pemanentmagneterregte Synchronmotoren, möglich ist. Das erfindungsgemäße Verfahren, sowie eine entsprechende Anordnung, haben den Vorteil, daß sich ein einfacherer Aufbau des magnetgelagerten, elektromagnetischen Rotors bzw. Aktors ergibt.

Das erfindungsgemässe Verfahren ist also ein Verfahren zur Ansteuerung der Tragkraft- und Momentenwicklungssysteme von elektrischen Antrieben mit integriertem Magnetlager, wobei mittels im Stator oder im Rotor eingebrachter Momenten- und Tragkraftwicklungen am Rotor bzw. am Stator angreifende Kräfte erzeugt werden, wobei mittels einer Positions- und Winkelsensorik die Rotorposition und der Rotordrehwinkel erfasst werden, und wobei die Momentenund die Tragkraftwicklungen zur Erzeugung der Kräfte, welche radial und tangential am Rotor bzw. am Stator angreifen, mit Strangströmen versorgt werden, wobei die Strangströme von einer analogen oder digitalen Elektronik derart bemessen werden, dass die Abweichungen der vom Rotordrehwinkel abhängigen Kraftkomponenten von der Sinusform berücksichtigt werden.

Das Modell kann dabei vorteilhafterweise so ausgebildet sein, dass die tangentialen und radialen Kraftkomponenten unabhängig vom Rotordrehwinkel im wesentlichen entkoppelt werden. Dabei kann im Modell auch der Einfluss von Sättigung und Wirbelstrombildung berücksichtigt werden.

In einer weiteren vorteilhaften Ausgestaltung kann die Abweichung der vom Rotordrehwinkel abhängigen radial am Rotor bzw. am Stator angreifenden Kraftkomponenten von der Sinusform durch entsprechend geformte Strangstromverläufe korrigiert werden.

Ebenfalls kann in einer weiteren vorteilhaften Ausgestaltung die Abweichung der vom Rotordrehwinkel abhängigen, durch die tangential am Rotor bzw. am Stator angreifenden Kräfte gebildeten Drehmomente von der Sinusform durch entsprechend geformte Strangstromverläufe korrigiert werden.

Die erforderlichen Strangströme können entweder direkt als Strangströme oder gegebenenfalls indirekt über Spannungen in die Tragkraft- und Momentenwicklungen eingeprägt werden.

Die bereits genannte Entkopplung der tangentialen und radialen Kraftkomponenten können mit Hilfe eines in der elektrischen Schaltung hard- oder softwaremässig implentierten Entkopplungsnetzwerks bewirkt oder unterstützt werden.

Dem elektrischen Antrieb kann auch ein Betriebsverhalten eingeprägt werden, welches dem Betriebsverhalten einer Maschine mit etwa sinusförmiger Erregerfeldverteilung und etwa sinusförmiger Durchflutungsverteilung entspricht.

Die Strangströme können (siehe oben) der Beziehung

$$\Delta \mathbf{I} = \left( \frac{\partial}{\partial \mathbf{I}} \mathbf{Q}(\mathbf{I}_0, \varphi, \mathbf{x}_0) \right)^{-1} \left( \mathbf{Q} - \mathbf{Q}(\mathbf{I}_0, \varphi, \mathbf{x}_0) - \frac{\partial}{\partial \mathbf{x}} \mathbf{Q}(\mathbf{I}_0, \varphi, \mathbf{x}_0) \Delta \mathbf{x} \right)$$

und im Bereich der Ruhelage $\mathbf{x}_0 = 0$ des Rotors und im Bereich von $\mathbf{I} = \mathbf{I}_0$ der Beziehung

$$\mathbf{I} = k(\varphi)\mathbf{Q}$$

genügen, wobei

$\mathbf{Q}$ den Vektor der Tragkräfte und des Drehmoments bezeichnet,
$\mathbf{x}_0$ den Vektor der Position des Rotors bezeichnet, wenn sich der Rotor in einer Ruhelage befindet,
$\Delta \mathbf{x}$ die Abweichung der Position des Rotors aus einer Ruhelage bezeichnet,
$\mathbf{I}$ den Vektor der Strangströme bezeichnet,
$\mathbf{I}_0$ den Vektor der Strangströme bezeichnet, wenn sich der Rotor in der Ruhelage $\mathbf{x}_0$ befindet,
$\Delta \mathbf{I}$ die Stromänderung bezeichnet,
$\varphi$ den Rotordrehwinkel bezeichnet, und
$k(\varphi)$ eine vom Rotordrehwinkel $\varphi$ abhängige Matrix bezeichnet.

Aus den Vorgaben für die Kräfte bzw. Drehmomente im Hinblick auf die gewünschte Drehzahl, die gewünschte Rotorposition, den gewünschten Drehwinkel oder anderen Sollvorgaben, können bei der Bestimmung der erforderlichen Strangströme Zustandsgrößen wie Momentanwerte von Spannungen und Strömen in den Tragkraft- und Momentenwicklungen, die Position des Rotors, der Drehwinkel oder von daraus abgeleiteten Größen verwendet werden, wobei diese Größen entweder direkt über Sensoren oder indirekt und damit sensorlos aus den Strom- oder Spannungsverläufen der Wicklungen ermittelt werden können.

Bei separaten Tragkraft- und Momentenwicklungssystemen können bei der Ermittlung der erforderlichen Strangströme für die Steuerung bzw. Regelung der radialen und tangentialen Kräfte getrennte Strangströme zur Speisung einerseits der Tragkraft- und andererseits der Momentenwicklungen ermittelt werden.

Bei gemeinsamen Tragkraft- und Momentenwicklungssystemen können bei der Ermittlung der erforderlichen Strangströme für die Steuerung bzw. Regelung der radialen und tangentialen Kräfte Strangströme ermittelt werden, welche sowohl Komponenten für die Tragkraft- als auch Komponenten für die Drehmomentenbildung enthalten, wobei die Stromkomponenten für die Bildung der Tragkräfte und die Stromkomponenten für die Bildung der Drehmomente in den Strängen überlagert werden.

Für einen gegebenen Antrieb können durch einen Referenz- bzw. Kalibrierlauf, ausgehend von vorgegebenen nicht-optimalen Kraft- und Stromfunktionen, optimierte Kraft- und Stromfunktionen bestimmt werden.

Entsprechendes gilt für eine Anordnung zur Ansteuerung der Tragkraft- und Momentenwicklungssysteme von elektrischen Antrieben mit integriertem Magnetlager. Die erfindungsgemäße Anordnung ist eine Anordnung zur Ansteuerung der Tragkraft- und Momentenwicklungssysteme von elektrischen Antrieben mit integriertem Magnetlager, welcher Antrieb eine elektrische Maschine mit im Stator oder Rotor eingebrachten Momenten- und Tragkraftwicklungen umfasst, einer Positions- und Winkelsensorik und einer analogen oder digitalen Elektronik zur Steuerung. Regelung, Überwachung und Speisung der Maschine gekennzeichnet durch Mittel zur Durchführung des Verfahrens nach einem der vorangehenden Ansprüche , wobei die Mittel mehrere elektrische Einheiten umfassen, nämlich

eine Sensorik (79) oder einer Rechenschaltung zur Messung bzw. zur Berechnung von Zustandsgrößen wie Momentanwerte von Strom und Spannung in den Tragkraft- und Momentenwicklungen, Rotorposition, Drehwinkel oder daraus abgeleitete Größen,

digitale oder analoge Schaltungen (71, 72, 73, 74, 81, 82, 85), in welchen die Regelung und andere Signalverarbeitungen bzw. -auswertungen hardwaremäßig, softwaremäßig oder in Form von Wertetabellen implementiert sind,

analoge oder geschaltete Leistungssteller zur Einprägung von Strangströmen (75) oder Strangspannungen (86) in Tragkraft- und Momentenwicklungen der elektrischen Maschine.

Schliesslich betrifft die Erfindung noch einen elektrischen Antrieb mit integriertem Magnetlager, wobei dieser Antrieb die vorstehend spezifizierte Anordnung zur Ansteuerung der Momenten- und Tragkraftwicklung aufweist.

In den weiter oben erläuterten Gleichungen sind die Beziehungen zwischen Kräften, Momenten und den erforderlichen Strömen in allgemeiner Darstellung beschrieben. Die Bearbeitung der Beziehungen z.B. in einem Mikroprozessor setzt nun aber voraus, dass die Beziehungen z.B. in tabellarischer Form oder als Gleichungen oder in Fourierreihendarstellung vorliegen. Als Beispiel für den letztgenannten Fall wird die Beziehung zwischen $\mathbf{Q} = \begin{bmatrix} F_x \\ F_y \\ M \end{bmatrix}$ und

den Strömen in Fourierreihendarstellung exemplarisch beschrieben.

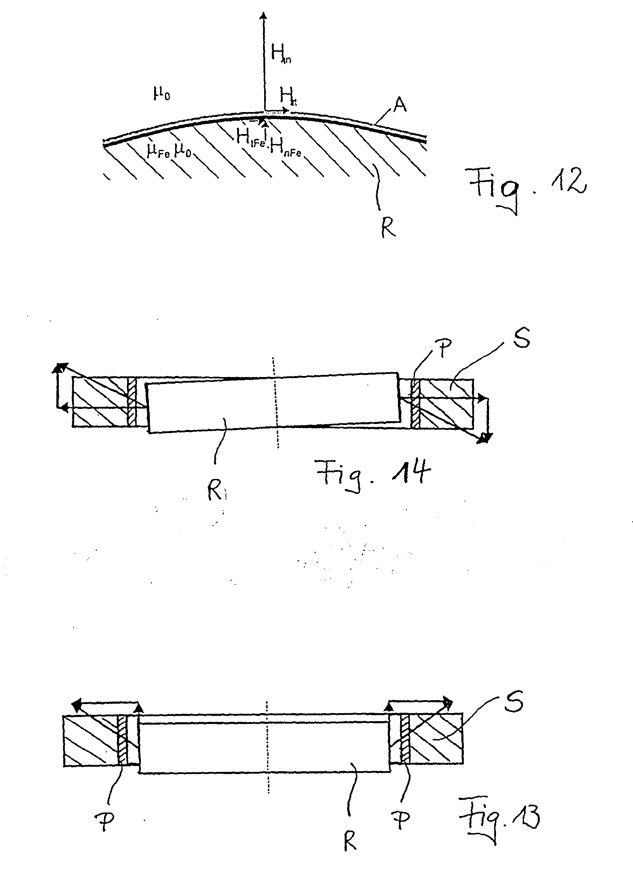

Für die analytische Untersuchung der Kräfte in elektrischen Maschinen sind allerdings Vereinfachungen erforderlich (siehe Fig. 12)

- Die Kräfte bzw. Momente greifen an ferromagnetischen Körpern an, die im Fall einer rotierenden elektrischen Maschine zylinderförmig sind. Dabei wird angenommen, daß die relative Permeabilität von Eisen $\mu_{Fe}$ sehr viel größer als diejenige von Luft ($\mu_0$) ist.
- Die erforderlichen stromdurchflossenen Leiter sind zum überwiegenden Teil in Nuten gebettet. Zur Vereinfachung kann der Strom durch einen äquivalenten Strom in einer infinitesimal dünnen Schicht an der Rotoroberfläche ersetzt werden. Diese flächenhafte Stromdichte wird als Strombelag A bezeichnet.
- Die Tangentialkomponente der Flußdichte im Luftspalt kann gegenüber der Normalkomponente vernachlässigt werden.

Bekanntlicherweise bestimmt sich die Oberflächenspannung $\sigma_{12}$ an einem ferromagnetischen Körper unter Berücksichtigung der obengenannten Vereinfachungen (siehe z.B. den Rotor R in Fig. 12) im magnetischen Feld aus der Beziehung:

$$\sigma_{12} = \begin{bmatrix} \dfrac{B_{1n}^2}{2\mu_0} \\ A\,B_{1n} \\ 0 \end{bmatrix} \qquad\qquad (8)$$

wobei

$B_{1n}$ die Normalkomponente der Luftspaltflussdichte ($B_{1n} = \mu_0\,H_{1n}$)
$\mu_0$ die magnetische Permeabilität in Luft und
A den Strombelag an der Oberfläche bezeichnen.

Dabei ist aufgrund der axialen Mittenlage des Rotors die Spannungskomponente in axialer Richtung null.
Die Kräfte können aus der Beziehung

$$dF = \sigma_{12}\,ds$$

ermittelt werden, wobei dF ein Grenzflächenelement darstellt.
In der Literatur wird die Normalkomponente dieser so erhaltenen Kraft als Maxwellkraft (Kraft an der Grenzfläche von Körpern mit unterschiedlichen Permeabilitäten) und die Tangentialkomponente als Lorentzkraft (Kraft auf einen stromdurchflossenen Leiter im magnetischen Feld) bezeichnet. Die resultierenden Kräfte können durch Integration über die Gesamtoberfläche ermittelt werden.
Allgemein sind in rotierenden elektrischen Maschinen die Flußdichte im Luftspalt und der Ankerstrombelag periodische Funktionen. Diese meist nicht sinusförmigen Größen können mit Hilfe von Fourierreihen der Form

$$f(\varphi) = \sum_{\mu=-\infty}^{\infty} c_\mu e^{j\mu\varphi} \qquad\qquad (9)$$

$$c_\mu \in C$$

dargestellt werden. Dabei sind zur Charakterisierung der Funktionen ausschließlich die sogenannten Fourierkoeffizienten $c_\mu$ von Interesse. Diese ergeben sich wie folgt:

$$c_\mu = \frac{1}{2\pi}\int_{-\pi}^{\pi} f(\varphi)e^{-j\mu\varphi}\,d\varphi \qquad\qquad (10)$$

Formal können diese Fourierkoeffizienten zu einem infiniten Spaltenvektor zusammengefaßt werden:

$$\mathbf{c} = \begin{bmatrix} \vdots \\ c_{-2} \\ c_{-1} \\ c_0 \\ c_1 \\ c_2 \\ \vdots \end{bmatrix} \qquad\qquad (11)$$

Man kann damit wiederum die Funktion

$$f(\varphi) = \Omega^T \mathbf{c} \qquad\qquad (12)$$

mit

$$\Omega = \begin{bmatrix} \vdots \\ e^{-2j\varphi} \\ e^{-j\varphi} \\ 1 \\ e^{j\varphi} \\ e^{2j\varphi} \\ \vdots \end{bmatrix} \qquad\qquad (13)$$

beschreiben.

Die Normalkomponente der Flußdichte im Luftspalt kann also in der Form:

$$B_{1n} = \Omega^T \mathbf{b} \qquad\qquad (14)$$

angegeben werden.

Der Betrag des Ankerstrombelag kann analog als

$$A = \Omega^T \mathbf{a} \qquad\qquad (15)$$

angegeben werden.

Die Darstellung des Ankerstrombelages A nach Gleichung (15) erweist sich für analytische Untersuchungen als ungünstig, da kein direkter Zusammenhang zu den Strangströmen besteht. Günstiger für die Darstellung des Ankerstrombelages A ist die Verwendung einer Verteilungsfunktion der Wicklungen. Damit kann der Strombelag A in der Form:

$$A = \gamma \, \mathbf{I} \qquad (16)$$

$$\gamma = \begin{bmatrix} \gamma_1 & \gamma_2 & \cdots & \gamma_m \end{bmatrix}, \quad \mathbf{I} = \begin{bmatrix} I_1 \\ I_2 \\ \vdots \\ I_m \end{bmatrix}$$

dargestellt werden.

Unter Verwendung von Fourierkoeffizienten für die Verteilungsfunktion erhält man schließlich für den Strombelag in einer Maschine mit m-Wicklungssystemen folgende Beziehung:

$$A = \Omega^T \, \mathrm{d} \, \mathbf{I} \qquad (17)$$

$$\mathrm{d} = \begin{bmatrix} \vdots & \vdots & & \vdots \\ d_{-2,1} & d_{-2,2} & \cdots & d_{-2,m} \\ d_{-1,1} & d_{-1,2} & \cdots & d_{-1,m} \\ d_{0,1} & d_{0,2} & \cdots & d_{0,m} \\ d_{1,1} & d_{1,2} & \cdots & d_{1,m} \\ d_{2,1} & d_{2,2} & \cdots & d_{2,m} \\ \vdots & \vdots & & \vdots \end{bmatrix}, \quad \mathbf{I} = \begin{bmatrix} I_1 \\ I_2 \\ \vdots \\ I_m \end{bmatrix}$$

Die vereinfachte Spannung an der Grenzfläche eines ferromagnetischen Körpers mit Strombelag an der Oberfläche nimmt unter Verwendung von Fourierkoeffizienten folgende Form an:

$$\sigma_{12} = \begin{bmatrix} \dfrac{1}{2\mu_0} \mathbf{b}^T \Omega \Omega^T \mathbf{b} \\ \mathbf{I}^T \, \mathrm{d}^T \, \Omega \Omega^T \mathbf{b} \\ 0 \end{bmatrix} \qquad (18)$$

Den Betrag des elektrischen Moments M erhält man aus der Schubspannung (nur die Tangetialkraft trägt zum Moment M bei, die Tangentialkraft ermittelt man duch Integration der Tangentialkomponente der Schubspannung über die Oberflächenelemente, ein Oberflächenelement selbst lässt sich durch die Länge l multipliziert mit dem Radius r multipliziert mit dφ beschreiben, das Moment M ergibt sich dann durch erneute Multiplikation mit dem Radius r):

$$M = l r^2 \int_{-\pi}^{\pi} \mathbf{I}^T \, \mathrm{d}^T \, \Omega \Omega^T \mathbf{b} \, d\varphi \qquad (19)$$

$$M = l r^2 \mathbf{I}^T \, \mathrm{d}^T \left( \int_{-\pi}^{\pi} \Omega \Omega^T \, d\varphi \right) \mathbf{b}$$

wobei

l    die axiale Rotorlänge und
r    den Radius des Rotors

bezeichnen.

In der Gleichung (19) ist nur der Term $\Omega\Omega^T$ von $\varphi$ abhängig. Dadurch kann das bestimmte Integral gelöst werden und man erhält folgende Vereinfachung:

$$M = l r^2 \mathbf{I}^T \mathbf{d}^T \mathbf{m} \mathbf{b} \qquad (20)$$

$$\mathbf{m} = 2\pi \begin{bmatrix} & & \ddots & \ddots & \ddots \\ & 0 & 0 & 1 & \ddots \\ \ddots & 0 & 1 & 0 & \ddots \\ \ddots & 1 & 0 & 0 & \\ \ddots & \ddots & \ddots & & \end{bmatrix}$$

Aus der Struktur der infiniten Matrix m erkennt man, daß ausschließlich Harmonische des Strombelages und der Flußdichte im Luftspalt mit jeweils gleichen Ordnungszahlen einen Beitrag zum Moment liefern. Bei einer reinen sinusförmigen Verteilung der Flußdichte und des Ankerstrombelages erhält man nur bei gleicher Polpaarzahl der beiden Größen ein elektrisches Moment.

Bei der Berechnung der (Quer-)Kräfte auf den Rotor kann man analog vorgehen. Durch Integration über die Rotoroberfläche und der Darstellung der Kräfte im kartesischen Koordinatensystem erhält man für die Querkräfte:

$$\mathbf{F} = l r \begin{bmatrix} \dfrac{1}{2\mu_0} \mathbf{b}^T & -\mathbf{I}^T \mathbf{d}^T \\ \mathbf{I}^T \mathbf{d}^T & \dfrac{1}{2\mu_0} \mathbf{b}^T \\ 0 & 0 \end{bmatrix} \int_{-\pi}^{\pi} \begin{bmatrix} \Omega\Omega^T \cos\varphi \\ \Omega\Omega^T \sin\varphi \end{bmatrix} d\varphi \, \mathbf{b} \qquad (21)$$

$$\mathbf{F} = l r \begin{bmatrix} \dfrac{1}{2\mu_0} \mathbf{b}^T & -\mathbf{I}^T \mathbf{d}^T \\ \mathbf{I}^T \mathbf{d}^T & \dfrac{1}{2\mu_0} \mathbf{b}^T \\ 0 & 0 \end{bmatrix} \begin{bmatrix} \mathbf{f}_1 \\ \mathbf{f}_2 \end{bmatrix} \mathbf{b}$$

wobei für $f_1$ und $f_2$ gilt:

$$\mathbf{f}_1 = \pi \begin{bmatrix} & \ddots & \ddots & \ddots & \ddots & \ddots & \\ & 0 & 0 & 1 & 0 & 1 & \ddots \\ \ddots & 0 & 1 & 0 & 1 & 0 & \ddots \\ \ddots & 1 & 0 & 1 & 0 & 0 & \\ \ddots & \ddots & \ddots & \ddots & \ddots & \end{bmatrix} \qquad (22)$$

$$\mathbf{f}_2 = j\pi \begin{bmatrix} & \ddots & \ddots & \ddots & \ddots & \ddots & \\ & 0 & 0 & -1 & 0 & 1 & \ddots \\ \ddots & 0 & -1 & 0 & 1 & 0 & \ddots \\ \ddots & -1 & 0 & 1 & 0 & 0 & \\ \ddots & \ddots & \ddots & \ddots & \ddots & \end{bmatrix}$$

Die Sinus- und Cosinusfunktionen in Gleichung (21) erhält man durch den Übergang von einem zylinderförmigen Koordinatensystem des Rotors auf ein kartesisches Koordinatensystem.

Aus der Betrachtung von $\mathbf{f}_1$ und $\mathbf{f}_2$ erkennt man, daß nur diejenigen Harmonischen einen Beitrag zur Rotorquerkraft liefern, deren Ordnungszahlen um eins verschieden sind. Soll also in einem Motor gleichzeitig ein Moment und eine Querkraft erzeugt werden, benötigt man einerseits ein Wicklungssystem mit gleicher Polpaarzahl wie die Erregung zur Erzeugung des Moments (siehe Gleichung (20)) und andererseits ein Wicklungssystem mit einer Polpaarzahl, die sich um plus oder minus eins vom Erregersystem unterscheidet (siehe Gleichung 22) zur Erzeugung der Tragkräfte.

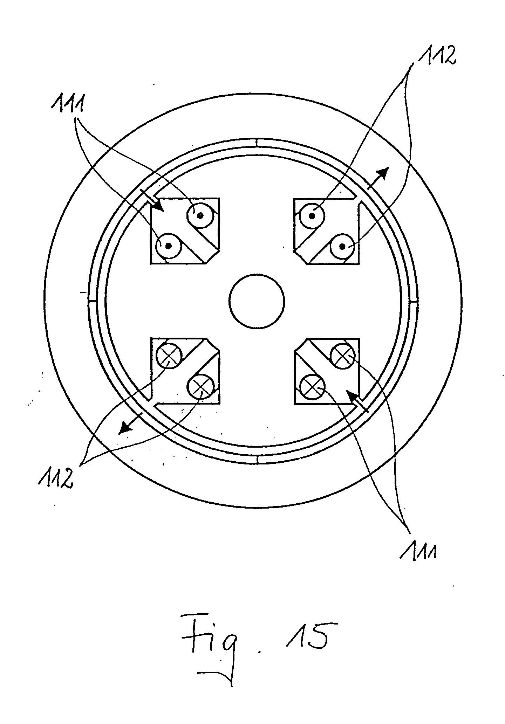

Typischerweise wird eine Maschine mit einer magnetischen Lagerung aus zwei Teilmotoren und einem Axiallager aufgebaut. Diese Konstruktion ermöglicht eine aktive Stabilisierung von fünf Freiheitsgraden. Für spezielle Anwendungen, wie z.B. Lüfter oder Pumpen, ist es möglich die axiale Länge des Rotors im Vergleich zum Durchmesser klein zu halten. Dadurch können drei Freiheitsgrade (axiale Verschiebung und Verkippung um zwei Achsen) durch Permanentmagnete passiv stabilisiert werden. In Fig. 13 und Fig. 14 wird die passive Stabilisierung des Rotors R durch eine Vorerregung mit Hilfe von Permanentmagneten P im Stator S verdeutlicht.

Die axiale Auslenkung des Rotors bewirkt eine axiale Kraft (die Kräfte sind durch Pfeile angedeutet), die entgegen der Richtung der Auslenkung gerichtet ist und den Rotor stabilisiert (Fig. 13). Für eine Winkelauslenkung oder Verkippung (Fig. 14) stellt sich ein stabilisierendes Moment ein. Die passive Stabilisierung ist zwar einfach, bringt jedoch den Nachteil, daß die Dynamik der Lagerung (d.h. die Steifigkeit und Dämpfung) nicht beeinflußt werden kann.

Die radiale Rotorposition muß aktiv stabilisiert werden. Dazu sind mindestens zwei Tragwicklungssysteme erforderlich, die um 90° (elektrisch) versetzt am Ständer angeordnet sind. Für Lüfter und Pumpenanwendungen kleinerer Leistung werden aus Kostengründen häufig Einphasenmotoren mit nur einem Wicklungssystem zur Drehmomentbildung eingesetzt. Diese Wicklungsanordnung kann auch für Motoren mit magnetischer Lagerung und kleinerer Leistung eingesetzt werden. Dabei ist zu beachten, daß mit Hilfe einer Einphasenwicklung kein Drehfeld erzeugt werden kann, sondern nur ein Wechselfeld. Es gibt also Rotorstellungen, in denen das Drehmoment trotz Bestromung der Momentenwicklung null ist. Dies kann besonders beim Anlauf des Motors zu Problemen führen. Durch geeignete Maßnahmen (unsymmetrischer Blechschnitt oder unsymmetrische Flußdichteverteilung im Luftspalt) kann verhindert werden, daß eine stabile Ruhelage des Rotors bedingt durch das Rastmoment mit einer Rotorstellung zusammenfällt, in der das elektrische Moment null ist.

Der gesamte Wicklungsaufbau eines Motors mit magnetischer Lagerung erfordert also drei Wicklungssysteme, die unabhängig voneinander entsprechend der Rotorlage, des erforderlichen Moments und der Radialkräfte bestromt werden müssen.

Wie bereits beschrieben, muß die Momentenwicklung gleiche Polpaarzahl wie das Erregersystem besitzen. Die Polpaarzahl der Tragwicklungen muß sich um eins von der Polpaarzahl des Erregersystemes unterscheiden. Der Aufwand auf der Motorseite soll so gering wie möglich sein. Mit Hilfe dieser Überlegungen kann die Polpaarzahl des Erregersystemes auf zwei festgelegt werden. Somit ergibt sich für die Momentenwicklung ebenfalls die Polpaarzahl von zwei und für die Tragwicklungen kann z.B. die Polpaarzahl eins gewählt werden.

Auf einem Ständer mit vier Nuten kann dieses Wicklungssystem untergebracht werden. In Fig. 15 sind die beiden Tragwicklungen 111, 112 und in Fig. 16 sind die Momentenwicklungen 113,114,115 und 116 dargestellt.

Weiterhin muß festgelegt werden, ob der Motor als Innenläufer oder als Außenläufer ausgeführt werden soll. Bei der Betrachtung der Kräfte (Summe aus Maxwell- und Lorentzkräfte) für die gewählten Polpaarzahlen stellt man fest, daß sich für den Außenläufermotor größere Radialkräfte ergeben als bei einem Innenläufer.

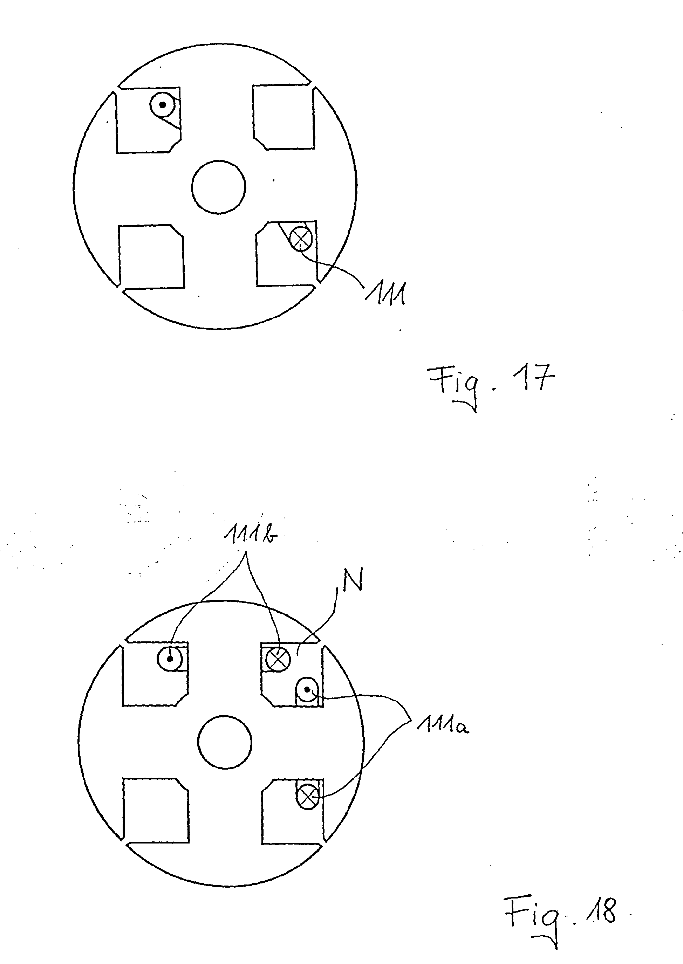

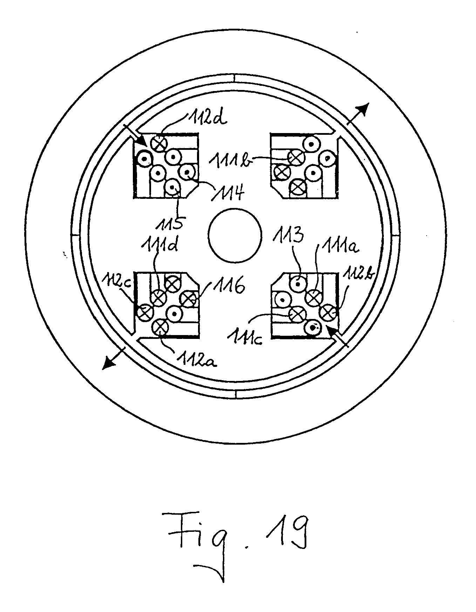

Eine fertigungstechnische Vereinfachung eines Einphasenmotors mit magnetischer Lagerung kann durch eine Veränderung der Wicklungsanordnung erreicht werden. Wird eine Tragwicklung 111 mit der Polpaarzahl eins betrachtet (Fig. 17), so kann die Wirkung dieser Wicklung durch zwei konzentrierte Spulen 111a und 111b mit der in Fig. 18 dargestellten Bestromung nachgebildet werden. Die Ströme in der mit N bezeichneten Nut heben sich in ihrer Wirkung annähernd auf, verursachen allerdings aufgrund der größeren Drahtlängen zusätzliche Verluste.

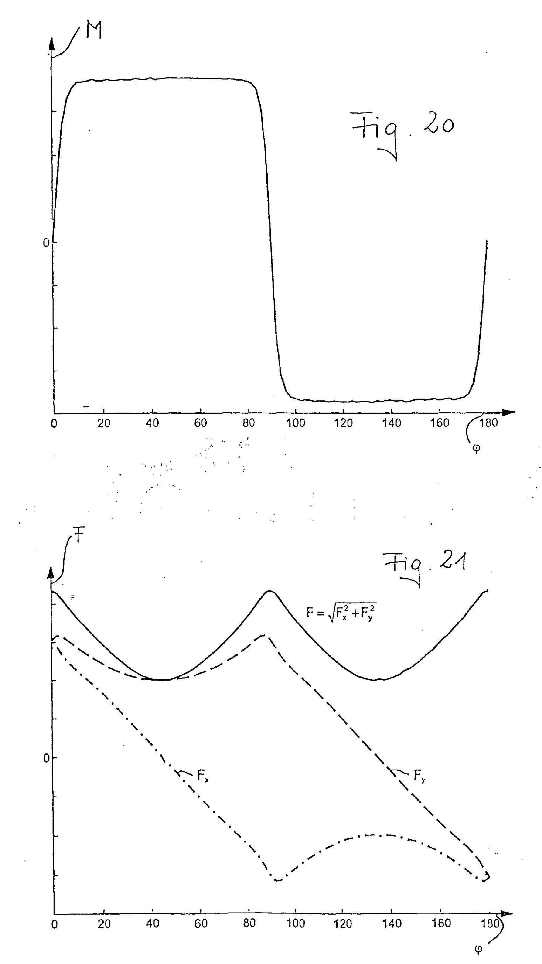

Durch analoge Überlegungen lassen sich alle Tragwicklungen durch konzentrierte Spulen ersetzen. Damit erhält man die in Fig. 19 dargestellte Wicklungsanordnung mit zwölf konzentrierten Spulen 111a-111d, 112a-112d, sowie 113-116.

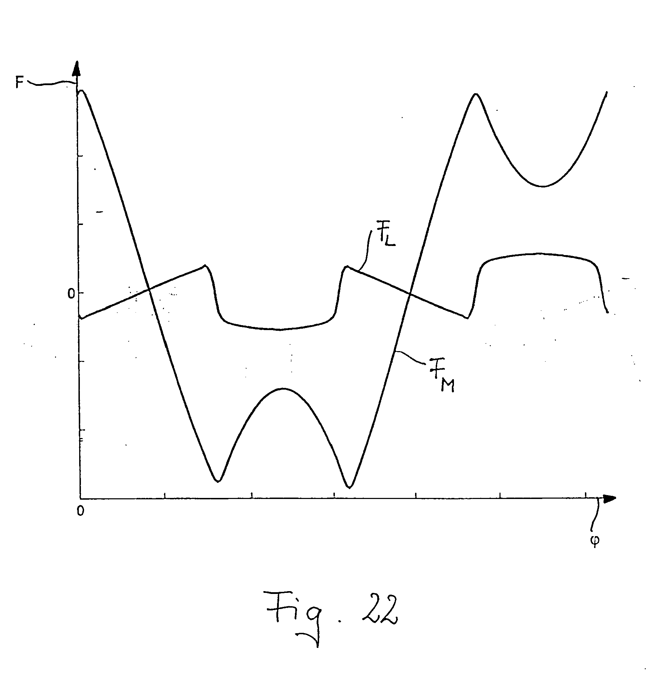

Durch die Verwendung konzentrierter Spulen ergeben sich Querkraftverläufe, die sehr stark von der Idealform (Sinusform) abweichen. In Fig. 20 ist der Momentenverlauf M und in Fig. 21 der Verlauf der x- und y-Komponente $F_x$ bzw. $F_y$ der Kraft F über den Winkel $\varphi$ dargestellt.

Die Berechnung der Kurvenverläufe in Fig. 20 und Fig. 21 kann mit Hilfe eines FEM (Finite Elemente Methode) Programmes erfolgen . Da bei dieser Vorgehensweise bei einer Drehung des Rotors in jeder Stellung das Maschennetz neu generiert werden muß, ergeben sich relativ lange Rechenzeiten.

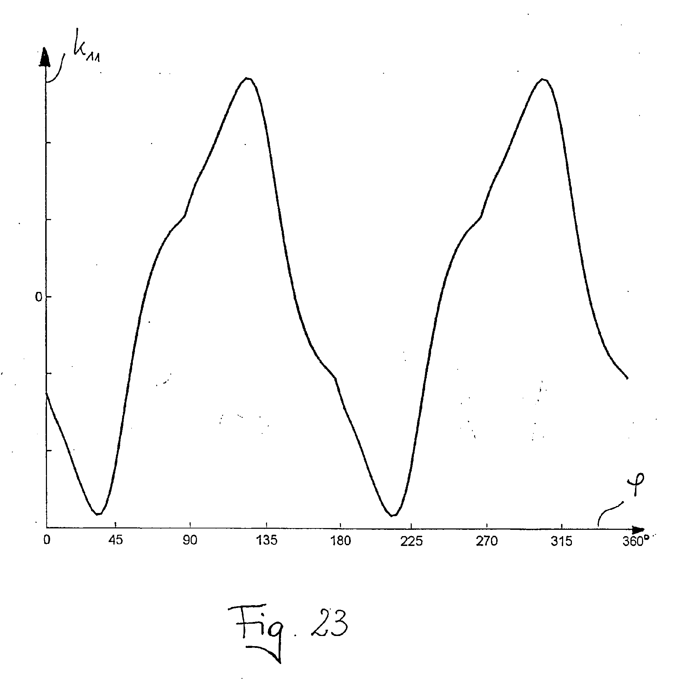

Wesentlich effizienter ist im Vergleich hierzu das erfindungsgemässe Verfahren. Bei dem erläuterten Ausführungsbeispiel mit den Fourierkoeffizienten wird die Normalkomponente der Flußdichteverteilung im Luftspalt für nur eine Rotorstellung mittels des FEM Programmes ermittelt, daraus die Fourierkoeffizienten berechnet und die Kräfte bzw. Momente berechnet. Eine Drehung des Rotors kann dann durch eine Verschiebung der Flußdichteverteilung und Ankerstrombeläge nachgebildet werden. Ein weiterer Vorteil dieser Methode ist, daß die Maxwellkräfte $F_M$ und Lorentzkräfte $F_L$ getrennt untersucht werden können (Fig. 22).

Zur kostenmäßigen Optimierung des Motors können die zwölf konzentrierten Spulen aus Fig. 19 durch vier konzentrierte Spulen ersetzt werden (Fig. 3). Die zur Momenten und Krafterzeugung erforderlichen Ströme müssen dann berechnet und jeweils kumuliert den einzelnen Spulen eingeprägt werden, wodurch eine aufwendigere Signal- und Leistungselektronik erforderlich wird. Als Vorteil ergibt sich jedoch die Möglichkeit, daß man bei kleineren erforderlichen Querkräften ein höheres Drehmoment erzielen kann und umgekehrt.

## Patentansprüche

**1.** Verfahren zur Ansteuerung der Tragkraft- und Momentenwicklungssysteme von elektrischen Antrieben mit integriertem Magnetlager, wobei mittels im Stator oder im Rotor eingebrachter Momenten- und Tragkraftwicklungen am Rotor bzw. am Stator angreifende Kräfte erzeugt werden, wobei mittels einer Positions- und Winkelsensorik die Rotorposition (36,37) und der Rotordrehwinkel ($\varphi$) erfasst werden, und wobei die Momenten- und die Tragkraftwicklungen zur Erzeugung der Kräfte , welche radial und tangential am Rotor bzw. am Stator angreifen, mit Strangströmen versorgt werden, **dadurch gekennzeichnet dass** die Strangströme von einer analogen oder digitalen Elektronik derart bemessen werden, dass die Abweichungen der vom Rotordrehwinkel ($\varphi$) abhängigen Kraftkomponenten von der Sinusform berücksichtigt werden.

**2.** Verfahren nach Anspruch 1,
wobei die tangentialen und radialen Kraftkomponenten unabhängig vom Rotordrehwinkel im wesentlichen entkoppelt werden und/oder der Einfluss von Sättigung und Wirbelstrombildung berücksichtigt wird.

**3.** Verfahren nach Anspruch 1 oder 2,
**dadurch gekennzeichnet, daß** die Abweichung der vom Rotordrehwinkel ($\varphi$) abhängigen radial am Rotor bzw. am Stator angreifenden Kraftkomponenten von der Sinusform winkelabhängig durch entsprechend geformte Strangströme korrigiert wird.

**4.** Verfahren nach einem der Ansprüche 1 bis 3,
**dadurch gekennzeichnet, daß** die Abweichung der vom Rotordrehwinkel ($\varphi$) abhängigen, durch die tangential am Rotor bzw. am Stator angreifenden Kräfte gebildeten Drehmomente von der Sinusform bei vorgegebenen Strangströmen winkelabhängig durch entsprechend geformte Strangströme korrigiert wird.

**5.** Verfahren nach einem der Ansprüche 1 bis 4,
**dadurch gekennzeichnet, daß** die erforderlichen Strangströme entweder direkt als Strangströme (78) oder gegebenenfalls auch indirekt über Einprägung von Spannungen (83) in die Tragkraft- und Momentenwicklungen eingeprägt werden.

6. Verfahren nach einem der Ansprüche 2 bis 5,
**dadurch gekennzeichnet, dass** die Entkopplung der tangentialen und radialen Kraftkomponenten mit Hilfe eines in der elektrischen Schaltung hard- oder softwaremässig implementierten Entkopplungsnetzwerks durchgeführt wird.

7. Verfahren nach einem der vorangegangenen Ansprüche,
**dadurch gekennzeichnet, daß** dem elektrischen Antrieb ein Betriebsverhalten eingeprägt wird, welches dem Betriebsverhalten einer Maschine mit etwa sinusförmiger Erregerfeldverteilung und etwa sinusförmiger Durchflutungsverteilung entspricht.

8. Verfahren nach einem der vorangegangenen Ansprüche,
**dadurch gekennzeichnet, daß** die Strangströme der Beziehung

$$\Delta \mathbf{I} = \left( \frac{\partial}{\partial \mathbf{I}} \mathbf{Q}\left(\mathbf{I}_0, \varphi, \mathbf{x}_0\right) \right)^{-1} \left( \mathbf{Q} - \mathbf{Q}\left(\mathbf{I}_0, \varphi, \mathbf{x}_0\right) - \frac{\partial}{\partial \mathbf{x}} \mathbf{Q}\left(\mathbf{I}_0, \varphi, \mathbf{x}_0\right) \Delta \mathbf{x} \right)$$

und im Bereich der Ruhelage $\mathbf{x}_0 = 0$ des Rotors und im Bereich von $I = I_0$ der Beziehung

$$\mathbf{I} = k(\varphi)\mathbf{Q}$$

genügen, wobei

$\mathbf{Q}$ den Vektor der Tragkräfte und des Drehmoments bezeichnet,
$\mathbf{x}_0$ den Vektor der Position des Rotors bezeichnet, wenn sich der Rotor in einer Ruhelage befindet,
$\Delta\mathbf{x}$ die Abweichung der Position des Rotors aus einer Ruhelage bezeichnet,
$\mathbf{I}$ den Vektor der Strangströme bezeichnet,
$\mathbf{I}_0$ den Vektor der Strangströme bezeichnet, wenn sich der Rotor in der Ruhelage $\mathbf{x}_0$ befindet,
$\Delta\mathbf{I}$ die Stromänderung bezeichnet
$\varphi$ den Rotordrehwinkel bezeichnet,
$k(\varphi)$ eine vom Rotordrehwinkel $\varphi$ abhängige Matrix bezeichnet.

9. Verfahren nach einem der vorangegangenen Ansprüche,
**dadurch gekennzeichnet, daß** aus den Vorgaben für die Kräfte bzw. Drehmomente im Hinblick auf die gewünschte Drehzahl, die gewünschte Rotorposition, den gewünschten Drehwinkel oder anderen Sollvorgaben, bei der Bestimmung der erforderlichen Strangströme Zustandsgrößen wie Momentanwerte von Spannungen und Strömen in den Tragkraft- und Momentenwicklungen, die Position des Rotors, der Drehwinkel oder von daraus abgeleiteten Größen verwendet werden, wobei diese Größen entweder direkt über Sensoren oder indirekt und damit sensorlos aus den Strom- oder Spannungsverläufen der Wicklungen ermittelt werden.

10. Verfahren nach einem der vorangegangenen Ansprüche,
bei welchem separate Tragkraft- und Momentenwicklungen vorgesehen sind, wobei bei der Ermittlung der erforderlichen Strangströme für die Steuerung bzw. Regelung der radialen und tangentialen Kräfte getrennte Strangströme zur Speisung einerseits der Tragkraft- und andererseits der Momentenwicklungen ermittelt werden, wobei die Stromkomponenten für die Bildung der Tragkräfte und die Stromkomponenten für die Bildung der Drehmomente in den Strängen überlagert werden.

11. Verfahren nach einem der vorangegangenen Ansprüche,
bei welchem gemeinsame Tragkraft- und Momentenwicklungen vorgesehen sind, wobei bei der Ermittlung der erforderlichen Strangströme für die Steuerung bzw. Regelung der radialen und tangentialen Kräfte Strangströme ermittelt werden, welche sowohl Komponenten für die Tragkraft- als auch Komponenten für die Drehmomentbildung enthalten, wobei die Stromkomponenten für die Bildung der Tragkräfte und die Stromkomponenten für die Bildung der Drehmomente in den Strängen überlagert werden.

12. Verfahren nach einem der vorangegangenen Ansprüche,
    wobei durch einen Referenz- bzw. Kalibrierlauf, ausgehend von vorgegebenen nicht-optimalen Kraft- und Stromfunktionen, für einen gegebenen Antrieb optimierte Kraft- und Stromfunktionen bestimmt werden.

13. Anordnung zur Ansteuerung der Tragkraft- und Momentenwicklungssysteme von elektrischen Antrieben mit integriertem Magnetlager, welcher Antrieb eine elektrische Maschine mit im Stator oder Rotor eingebrachten Momenten-und Tragkraftwicklungen umfasst, einer Positions- und Winkelsensorik und einer analogen oder digitalen Elektronik zur Steuerung, Regelung, Überwachung und Speisung der Maschine **gekennzeichnet durch** Mittel zur Durchführung des Verfahrens nach einem der vorangehenden Ansprüche, wobei die Mittel mehrere elektrische Einheiten umfassen, nämlich
    eine Sensorik (79) oder einer Rechenschaltung zur Messung bzw. zur Berechnung von Zustandsgrößen wie Momentanwerte von Strom und Spannung in den Tragkraft- und Momentenwicklungen, Rotorposition, Drehwinkel oder daraus abgeleitete Größen,
    digitale oder analoge Schaltungen (71, 72, 73, 74, 81, 82, 85), in welchen die Regelung und andere Signalverarbeitungen bzw. -auswertungen hardwaremäßig, softwaremäßig oder in Form von Wertetabellen implementiert sind, analoge oder geschaltete Leistungssteller zur Einprägung von Strangströmen (75) oder Strangspannungen (86) in Tragkraft- und Momentenwicklungen der elektrischen Maschine.

14. Elektrischer Antrieb mit integriertem Magnetlager, **dadurch gekennzeichnet, dass** er eine Anordnung zur Ansteuerung der Momenten- und Tragkraftwicklung gemäss Anspruch 13 aufweist

**Claims**

1. A method for the control of supporting force and torque winding systems of electrical drives with integrated magnetic bearings, wherein forces acting on the rotor and stator are generated by means of torque windings and supporting force windings which are inserted in the stator or rotor, wherein the rotor position (36, 37) and the angle of rotation ($\varphi$) of the rotor are determined by means of a position and angle sensor system and wherein the torque windings and supporting force windings for generating the forces which act radially and tangentially at the rotor and stator are supplied with winding currents, **characterized in that** the winding currents are measured by an analog or digital electronic system such that the deviations from the sinusoidal form of the force components dependent on the angle of rotation ($\varphi$) of the rotor are taken into account.

2. A method in accordance with claim 1, wherein the tangential and radial force components are substantially decoupled independently of the angle of rotation of the rotor; and/or in that the influence of saturation and eddy current formation is taken into account.

3. A method in accordance with claim 1 or claim 2,
   **characterized in that** the deviation from the sinusoidal form of the force components which act radially at the rotor or at the stator respectively, and which depend on the angle of rotation of the rotor ($\varphi$), are corrected in dependence on their angle by correspondingly formed winding currents.

4. A method in accordance with any one of the claims 1 to 3,
   **characterized in that** the deviation from the sinusoidal form at predetermined winding currents of the torques which are formed by the force components which act tangentially at the rotor and/or at the stator and which depend on the angle of rotation of the rotor ($\varphi$) are corrected in dependence on the angle by correspondingly formed winding currents.

5. A method in accordance with any one of the claims 1 to 4,
   **characterized in that** the required winding currents are applied to the supporting force and torque windings either directly as winding currents (78) or, if required, also indirectly via the application of voltages (83).

6. A method in accordance with any one of the claims 2 to 5,
   **characterized in that** the decoupling of the tangential and radial force components is carried out with the aid of a decoupling network which is implemented in the electrical circuit by means of hardware or software.

7.  A method in accordance with any one of the preceding claims,
    **characterized in that** an operating behavior is impressed on the electrical drive which corresponds to the operating behavior of a machine with an approximately sinusoidal excitation field distribution and approximately sinusoidal flux distribution.

8.  A method in accordance with any one of the preceding claims,
    **characterized in that** the winding currents satisfy the relationship

$$\Delta\mathbf{I} = \left(\frac{\partial}{\partial\mathbf{I}}\mathbf{Q}(\mathbf{I}_0,\varphi,\mathbf{x}_0)\right)^{-1}\left(\mathbf{Q} - \mathbf{Q}(\mathbf{I}_0,\varphi,\mathbf{x}_0) - \frac{\partial}{\partial\mathbf{x}}\mathbf{Q}(\mathbf{I}_0,\varphi,\mathbf{x}_0)\Delta\mathbf{x}\right)$$

and, in the region of the rest position $\mathbf{x}_0 = 0$ of the rotor and in the region of $\mathbf{I} = \mathbf{I}_0$, the relationship

$$\mathbf{I} = k(\varphi)\mathbf{Q},$$

with

    $\mathbf{Q}$ designating the vector of the supporting forces and of the torque,
    $\mathbf{x}_0$ designating the vector of the position of the rotor when the rotor is in a rest position,
    $\Delta\mathbf{x}$ designating the deviation of the position of the rotor from a rest position,
    $\mathbf{I}$ designating the vector of the winding currents,
    $\mathbf{I}_0$ designating the vector of the winding currents when the rotor is in the rest position $\mathbf{x}_0$,
    $\Delta\mathbf{I}$ designating the current change,
    $\varphi$ designating the angle of rotation of the rotor,
    $k(\varphi)$ designating a matrix which depends on the angle of rotation of the rotor $\varphi$.

9.  A method in accordance with any one of the preceding claims,
    **characterized in that** from the specifications for the forces and/or torques with regard to the desired speed of rotation, the desired rotor position, the desired angle of rotation or other desired specifications, state parameters such as momentary values of voltages and currents in the supporting force and torque windings, the position of the rotor, the angle of rotation or parameters derived therefrom are used in the determination of the required winding currents, with these parameters either being determined directly via sensors or indirectly and thereby free of sensors from the current or voltage plots of the windings.

10. A method in accordance with any one of the preceding claims, in which separate supporting force and torque winding systems are provided, wherein, in the determination of the required winding currents for the control and/or regulation of the radial and tangential forces, separate winding currents are determined for the feeding of the support force windings on the one hand and the torque windings on the other hand, with the current components for the forming of the supporting forces and the current components for the forming of the torques being superimposed in the windings.

11. A method in accordance with any one of the preceding claims, in which common supporting force and torque winding systems are provided, wherein winding currents, which contain both components for the production of the supporting force as well as components for the production of the torque, are determined during the determination of the required winding currents for the control or regulation of the radial and tangential forces, with the current components for the production of the supporting forces and the current components for the production of the torques being superimposed in the windings.

12. A method in accordance with any one of the preceding claims, wherein, starting from predetermined non-optimal force and current functions, optimized force and current functions are determined for a given drive through a reference and/or calibration run.

13. An arrangement for the control of the supporting force and torque winding systems of electrical drives with integrated magnetic bearing, said drive comprising an electrical machine with torque and supporting force windings which are inserted in the stator or rotor, a position and angle sensor system and an analog or digital electronic circuitry for the control, regulation, monitoring and feeding of the machine,

**characterized by** means for carrying out the method in accordance with any one of the preceding claims, wherein the means comprises a plurality of electrical units, namely

a sensor system (79) or a computational circuit for the measurement and/or calculation of state parameters such as the momentary values of current and voltage in the supporting force and torque windings, rotor position, angle of rotation or parameters derived therefrom, digital or analog circuits (71, 72, 73, 74, 81, 82, 85), in which the regulation and other signal processing or evaluation methods are implemented by means of hardware, by means of software or in the form of value tables,

analog or switched power controllers for the application of winding currents (75) or winding voltages (86) to supporting force and torque windings of the electrical machine.

14. An electrical drive with integrated magnetic bearing, **characterized in that** it has an arrangement for the control of the torque and supporting force winding in accordance with claim 13.


**Revendications**

1. Procédé pour l'amorçage des systèmes à enroulement pour force portante et couples d'entraînements électriques avec palier magnétique intégré, des forces s'appliquant sur le rotor ou sur le stator étant générées au moyen d'enroulements pour couples et force portante introduits dans le stator ou dans le rotor, la position de rotor (36, 37) et l'angle de rotation de rotor ($\varphi$) étant enregistrés au moyen d'un capteur de position et d'angle, et les enroulements pour couples et les enroulements pour force portante étant alimentés avec des courants de branche pour générer les forces qui s'appliquent radialement et tangentiellement sur le rotor et sur le stator, **caractérisé en ce que** les courants de branche sont dimensionnés par une électronique analogique ou numérique de telle sorte que les écarts par rapport aux composantes de force dépendantes de l'angle de rotation de rotor ($\varphi$) par rapport à la forme sinusoïdale sont pris en compte.

2. Procédé selon la revendication 1,
les composantes de force tangentielles et radiales étant sensiblement dissociées indépendamment de l'angle de rotation de rotor et/ou l'influence de la saturation et de la formation du courant de Foucault étant prise en compte.

3. Procédé selon la revendication 1 ou 2,
**caractérisé en ce que** l'écart des composantes de force s'appliquant radialement sur le rotor et sur le stator en fonction de l'angle de rotation de rotor ($\varphi$) par rapport à la forme sinusoïdale étant corrigé en fonction de l'angle par des courants de branche formés de façon appropriée.

4. Procédé selon l'une quelconque des revendications 1 à 3,
**caractérisé en ce que** l'écart des couples de rotation dépendants de l'angle de rotation de rotor ($\varphi$) et formés par les forces s'appliquant tangentiellement sur le rotor ou sur le stator par rapport à la forme sinusoïdale est corrigé, pour des courants de branche prédéfinis, en fonction de l'angle par des courants de branche formés de façon appropriée.

5. Procédé selon l'une quelconque des revendications 1 à 4,
**caractérisé en ce que** les courants de branche nécessaires sont intégrés directement sous la forme de courants de branche (78) ou éventuellement également indirectement par injection de tensions (83) dans les enroulements pour force portante et pour couples.

6. Procédé selon l'une quelconque des revendications 2 à 5,
**caractérisé en ce que** la dissociation des composantes de force tangentielles et radiales est effectuée à l'aide d'un réseau de dissociation mis en place au niveau du matériel ou du logiciel dans le circuit électrique.

7. Procédé selon l'une quelconque des revendications précédentes,
**caractérisé en ce qu'**un comportement de service, qui correspond au comportement de service d'une machine avec une répartition de champ excitateur à peu près sinusoïdale et une répartition de force magnétique à peu près sinusoïdale est imposé à l'entraînement électrique.

8. Procédé selon l'une quelconque des revendications précédentes,
**caractérisé en ce que** les courants de branche répondent à la relation suivante

$$\Delta I = \left(\frac{\partial}{\partial I}Q(I_0 + \varphi_1 x_0)\right)^{-1}\left(Q - Q(I_0,\varphi,x_0) - \frac{\partial}{\partial x}Q(I_0,\varphi,x_0)\Delta x\right)$$

et dans la zone de la position de repos $x_0 = 0$ du rotor et dans la zone de $I = I_0$ à la relation suivante

$$I = k(\varphi)Q$$

Q désignant le vecteur des forces portantes et du couple,
$x_0$ le vecteur désignant le vecteur de la position du rotor lorsque le rotor se trouve dans une position de repos,
$\Delta x$ désignant l'écart de la position du rotor à partir d'une position de repos,
I désignant le vecteur des courants de branche,
$I_0$ désignant le vecteur des courants de branche lorsque le rotor se trouve dans la position de repos $x_0$,
$\Delta I$ désignant la variation de courant,
$\varphi$ désignant l'angle de rotation de rotor
$k(\varphi)$ désignant une matrice dépendante de l'angle de rotation de rotor $\varphi$

9. Procédé selon l'une quelconque des revendications précédentes,
**caractérisé en ce que**, à partir des spécifications pour les forces ou couples par rapport au régime souhaité, à la position de rotor souhaitée, à l'angle de rotation souhaité ou d'autres spécifications théoriques, on utilise pour la détermination des courants de branche nécessaires des grandeurs d'état telles que valeurs instantanées de tensions et de courants dans les enroulements pour force portante et pour couples, la position de rotor, l'angle de rotation ou des grandeurs déduites de ces paramètres, ces grandeurs étant déterminées soit directement par des capteurs soit indirectement et donc sans capteur à partir des courbes de courant ou de tension des enroulements.

10. Procédé selon l'une quelconque des revendications précédentes,
dans lequel des enroulements séparés pour force portante et couples sont prévus, des courants séparés pour l'alimentation d'une part des enroulements pour force portante et d'autre part des enroulements pour couples étant déterminés lors du calcul des courants de branche nécessaires pour la commande ou le réglage des forces radiales et tangentielles, les composants du courant pour la formation des forces portantes et les composantes du courant pour la formation des couples étant superposées dans les branches.

11. Procédé selon l'une quelconque des revendications précédentes,
dans lequel des enroulements communs pour force portante et pour couples sont prévus, des courants de branche étant déterminés lors du calcul des courants de branche nécessaires pour la commande et le réglage des forces radiales et tangentielles, lesquels courants contiennent aussi bien des composantes pour la formation de la force portante que des composantes pour la formation du couple, les composantes du courant pour la formation des forces portantes et les composantes du courant pour la formation des couples étant superposées dans les branches.

12. Procédé selon l'une quelconque des revendications précédentes,
des fonctions de force et de courant optimisées pour un entraînement donné étant déterminées par une course de référence ou de calibrage, à partir de fonctions de force et de courant non optimales et prédéfinies.

13. Agencement pour l'amorçage des systèmes d'enroulement pour force portante et pour couples d'entraînements électriques avec palier magnétique intégré, lequel entraînement comprend une machine électrique avec des enroulements pour couples et force portante introduits dans le stator ou le rotor, d'un capteur de position et d'angle et d'une électronique analogique ou numérique pour la commande, le réglage, le contrôle et l'alimentation de la machine, **caractérisé par** des moyens pour la mise en oeuvre du procédé selon l'une quelconque des revendications précédentes, les moyens comprenant plusieurs unités électriques, à savoir
un capteur (79) ou un circuit de calcul pour la mesure ou pour le calcul de grandeurs d'état telles que des valeurs momentanées de courant et de tension dans les enroulements pour force portante et couples, position de rotor, angle de rotation ou grandeurs déduites de ces paramètres,

des circuits numériques ou analogiques (71, 72, 73, 74, 81, 82, 85), dans lesquels le réglage et d'autres traitements ou analyses de signal sont mis en oeuvre au niveau du matériel, du logiciel ou sous la forme de tableaux de valeurs,

des actionneurs de puissance analogiques ou commutés pour l'injection de courants de branche (75) ou de tensions de branche (86) dans des enroulements pour force portante et couples de la machine électrique.

14. Entraînement électrique avec palier magnétique intégré, **caractérisé en ce qu'**il présente un agencement pour l'amorçage de l'enroulement pour couples et force portante selon la revendication 13.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 14

Fig. 13

Fig. 15

Fig. 16

Fig. 17

Fig. 18

Fig. 19

Fig. 20

Fig. 21

$$F = \sqrt{F_x^2 + F_y^2}$$

$F_x$

$F_y$

Fig. 22

Fig. 23

Fig. 24

Fig. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0739078 A